# EUROPEAN PATENT SPECIFICATION

(11) **EP 2 011 806 B1**
(45) Date of publication and mention of the grant of the patent: **11.04.2012**
(21) Application number: 07742443.0
(22) Date of filing: 19.04.2007
(51) Int. Cl.: C08F 128/02, C08F 4/04, C08J 5/22, H01B 1/06, H01M 8/02, H01M 8/10, H01M 8/24

(54) **VINYL POLYMER OF SULFONATED MONOMER, PRODUCTION METHOD THEREOF, POLYMER ELECTROLYTE, POLYMER ELECTROLYTE MEMBRANE AND FUEL CELL**
VINYLPOLYMER EINES SULFONIERTEN MONOMERS, HERSTELLUNGSVERFAHREN DAFÜR, POLYMERELEKTROLYT, POLYMERELEKTROLYTMEMBRAN UND BRENNSTOFFZELLE
POLYMERE VINYLIQUE D'UN MONOMERE SULFONE, SON PROCEDE DE PRODUCTION, POLYMERE ELECTROLYTE, MEMBRANE DE POLYMERE ELECTROLYTE ET PILE A COMBUSTIBLE

(30) Priority: 19.04.2006 JP 2006115847
(43) Date of publication of application: 07.01.2009
(73) Proprietor: Toyota Jidosha Kabushiki Kaisha, Toyota-shi, Aichi 471-8571 (JP)
(72) Inventor: HASE, Kohei, Toyota-shi Aichi 471-8571 (JP); KITASHOJI, Takeru, Amagasaki-shi Hyogo 660-0805 (JP); TANABE, Susumu, Amagasaki-shi Hyogo 660-0805 (JP)
(74) Representative: Kuhnen & Wacker
(86) International application number: PCT/JP2007/059008
(87) International publication number: WO 2007/123268

(56) References cited:
- EP-A1- 1 630 890
- EP-A2- 0 303 112
- JP-A- 1 318 016
- JP-A- 01 318 016
- JP-A- 2002 528 433
- JP-A- 2004 027 162
- JP-A- 2004 292 649
- JP-A- 2005 526 875
- JP-A- 2006 261 004
- JP-A- 2007 018 972
- DATABASE WPI Section Ch, Week 197620 Thomson Scientific, London, GB; Class A91, AN 1976-36664X XP002539247 & JP 51 037180 A (JAPAN ATOMIC ENERGY RES INST) 29 March 1976 (1976-03-29)

## Description

### Technical Field

The present invention relates to a vinyl polymerization method of a sulfonated monomer, which conventionally has been said to be difficult, and to a novel polymerized vinyl polymer of a sulfonated monomer. The present invention also relates to a novel polymer electrolyte which comprises the vinyl polymer of a sulfonated monomer and which can serve as a substitute for a conventional fluoropolymer electrolyte, and to a polymer electrolyte membrane. In addition, the present invention relates to a solid polymer fuel cell containing as a solid polymer electrolyte membrane a polymer electrolyte membrane comprising of a vinyl polymer of a sulfonated monomer.

### Background Art

Fuel cells are devices which generate electrical energy according to an operational theory based on the reverse action of the electrolysis of water. In a fuel cell, generally, hydrogen obtained by reforming a fuel such as natural gas, methanol and coal, and oxygen in air are fed to generate direct-current power while producing water. Thus, because the generation efficiency is high, and clean energy can be supplied, fuel cell power generation is attracting attention.

Depending on the type of electrolyte used, fuel cells can be classified as phosphoric acid fuel cells, molten carbonate fuel cells, solid oxide fuel cells, solid polymer fuel cells and the like. Of these, because solid polymer fuel cells which use an ion-exchange membrane (solid polymer electrolyte membrane) as the electrolyte essentially consist of only a solid, they have the advantages of being free from problems of electrolyte dissipation or retention, operating at low temperatures of 100°C or less, having a very short start-up time and enabling a higher energy density, smaller size and lighter weight.

Therefore, solid polymer electrolyte fuel cells are being developed as power sources for automobiles, dispersed-type power sources for homes and buildings, power sources for space vehicles, and portable power sources. Specifically, from the standpoint of environmental issues such as global warming and measures to decrease automobile exhaust gas, solid polymer electrolyte fuel cells are gaining attention as fuel cells for mounting on automobiles.

Solid polymer electrolytes are a solid polymer material having an electrolyte group such as a sulfonic acid group in a polymer chain. Since solid polymer electrolytes have properties to strongly bind to specific ions and to allow positive or negative ions to be selectively transmitted, they are formed as particles, fibers, or membranes and used for various applications such as electrodialysis, diffusion dialysis, and battery diaphragms.

Solid polymer electrolyte fuel cells comprise, for example, a proton-conducting solid polymer electrolyte membrane and a pair of electrodes provided with one electrode on each side of the membrane. Hydrogen gas is supplied to one of the electrodes (fuel electrode) as fuel gas, and oxygen gas or air is supplied to the other electrode (air electrode) as an oxidant to obtain an electromotive force. Water electrolysis is a method for producing hydrogen and oxygen by electrolyzing water using a solid polymer electrolyte membrane.

In a fuel cell or water electrolysis, peroxide is produced at the catalyst layer formed on the interface between the solid polymer electrolyte membrane and the electrodes. The produced peroxide turns into peroxide radicals while diffusing, and cause a degenerative reaction to occur. As a result, it is difficult to use a hydrocarbon electrolyte membrane, which has poor acid resistance. Therefore, in a fuel cell or water electrolysis, a perfluorosulfonic acid membrane is generally used which has high proton conductivity and high resistance to acid.

Further, brine electrolysis is a method which produces sodium hydroxide, chlorine and hydrogen from electrolysis of aqueous sodium chloride using a solid polymer electrolyte membrane. In this case, the solid polymer electrolyte membrane is exposed to chlorine and hot, highly concentrated aqueous sodium hydroxide, and thus a hydrocarbon electrolyte membrane, which has poor resistance to these substances, cannot be used. Therefore, for a solid polymer electrolyte membrane for brine electrolysis, a perfluorosulfonic acid membrane is generally used which is resistant to chlorine and hot, highly concentrated aqueous sodium hydroxide, and is partially incorporated with carboxylic acid groups on its surface to prevent back-diffusion of the produced ions.

However, since fluorine electrolytes represented by perfluorosulfonic acid membranes have a C-F bond, they have a very high chemical stability, and are thus used as the above-described solid polymer electrolyte membrane for fuel cells, water electrolysis or brine electrolysis, the solid polymer electrolyte for hydrohalic acid electrolysis, as well as being widely applied in humidity sensors, gas sensors, oxygen concentrators and the like by utilizing proton conductivity.

Fluorine electrolyte membranes, represented by the perfluorosulfonic acid membrane known by the trade name "Nafion^{®}" (manufactured by DuPont), are especially acclaimed as an electrolyte membrane which can be used under harsh conditions due to their very high chemical stability.

However, fluorine electrolytes have the drawbacks of being difficult to produce and being expensive. In contrast, compared with the fluorine electrolyte membrane represented by "Nafion^{®}", hydrocarbon electrolyte membranes have the advantages of being easier to produce, and having a lower-cost, as well as a high degree of freedom in molecular design and an ion-exchange capacity which can be easily adjusted.

In producing a hydrocarbon electrolyte membrane, if the hydrolysate of a vinyl polymer of an acid type sulfonated vinyl monomer or of a vinyl polymer of an ester type sulfonated vinyl monomer can be produced, then the preferable advantages of being more easily produced and having a lower cost than fluorine electrolyte membranes represented by "Nafion^{®}", as well as having a higher degree of freedom in molecular design and an ion-exchange capacity which is more easily adjusted can be expected.

However, polymerization of such sulfonated vinyl monomers by ordinary radical polymerization, cationic polymerization and coordination polymerization is known to be difficult. For example, Japanese Patent Publication (Kohyo) No. 2005-526875 A describes the invention of a proton conducting polymer membrane having as a main component a polyvinylsulfonic acid obtained by a method comprising the steps of: A) mixing a polymer with sulfonic acid containing vinyl; B) forming a flat structure by using the inventive mixture from step A) on a support; and C) polymerizing the vinyl-containing sulfonic acid present in the flat structure from step B).

However, in the method described in Japanese Patent Publication (Kohyo) 2005-526875 A, polymerization does not occur by the vinyl sulfonic acid alone. The polymerization is merely carried out after a very complex process by copolymerization with other polymers, and thus it is difficult to say that excellent chemical and thermal properties expected from a polymer of a sulfonated vinyl monomer would be sufficiently exhibited.

Ultimately, most conventional electrolyte materials for hydrocarbon fuel cells are super engineering plastic electrolytes. There are few electrolyte materials having a sulfonic group for the ion-exchange group and a flexible main chain skeleton. Further, expressing high proton conductivity under high-temperature, low-humidification conditions by making the acid concentration (sulfonic group concentration) of an electrolyte higher is also a problem to be solved.

An example of an electrolyte material for hydrocarbon fuel cells which has a flexible main chain skeleton is polystyrenesulfonic acid. However, this substance has a structure wherein the sulfonic group is linked to an aromatic ring. While it is comparatively easy to introduce a sulfonic group into an aromatic ring, precise control of the sulfonic group introduction rate and the degree of freedom of the molecular design are problematic. Especially in the case of trying to synthesize a high acid concentration electrolyte by a posttreatment (sulfonic group introduction into the polymer), there occur sites where the acid cannot be introduced, thus making it difficult to obtain a desirable high acid concentration.

Thus, in the synthesis of a high acid concentration electrolyte, it is preferable to obtain the polymer by polymerizing a monomer having a sulfonic group as a substituent. However, currently, when trying to synthesize a polymer from a vinyl monomer having a sulfonic group as a substituent, polymerization does not proceed in the typically-used methods of radical polymerization, cationic polymerization, anionic polymerization and coordination polymerization, and a polymer cannot be obtained.

### Disclosure of the Invention

In consideration of the above-described problems, the present invention provides a novel hydrocarbon vinyl polymer aimed at providing a hydrocarbon solid polymer electrolyte having chemical and physical properties which are equal to or better than those of a fluorine electrolyte, or which are sufficient for practical use, yet can be produced at a low cost. Additionally, the present invention provides a polymer electrolyte membrane suitable as the ion-exchange membrane of a solid polymer fuel cell by employing the polymer of a sulfonated monomer which has excellent film-forming properties and a large ion-exchange capacity (EW). Further, the present invention provides a solid polymer fuel cell comprising a polymer of a sulfonated vinyl monomer having such excellent properties as a solid polymer electrolyte membrane.

As a result of intensive research, the present inventors discovered that vinyl polymerization of a sulfonated monomer by typical radical polymerization, cationic polymerization, anionic polymerization or coordination polymerization, which has been said to be difficult, is possible by making the monomer concentration high, which is contrary to common technical knowledge in the art, thereby arriving at the present invention. While it is not entirely clear why polymerization of a sulfonated monomer is difficult, side reactions resulting from the sulfonic group are thought to inhibit the intended vinyl polymerization.

A first aspect of the present invention is an invention of a polymer compound, which is a vinyl polymer of a sulfonated monomer having a basic skeleton represented by the following formula (1). 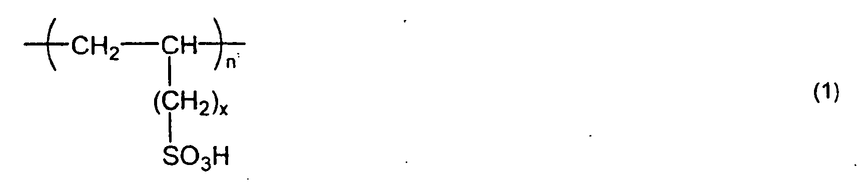 wherein x is 2 and n is 10 to 10,000, and wherein the vinyl polymer is a homopolymer or a copolymer with another vinyl monomer.

The vinyl polymer of a sulfonated monomer according to the present invention comprises a main chain composed of a hydrocarbon and a side chain, and has an ion-exchangeable sulfonic acid group. As a result, the vinyl polymer is flexible and capable of exchanging ions.

The vinyl polymer of a sulfonated monomer having a basic skeleton represented by the above-described formula (1) is a homopolymer, and so long as it contains the above-described repeating unit, or a copolymer with another vinyl monomer. Examples thereof include a random copolymer, block copolymer or partial-block copolymer containing the repeating unit represented by formula (1). Even in this case, the repeating unit represented by formula (1) confers its chemical and physical properties to the vinyl polymer of a sulfonated monomer according to the present invention.

The vinyl polymer of a sulfonated monomer according to the present invention has excellent ion-exchangeability and is flexible and physically stable, and thus holds promise of becoming a substitute for fluorine electrolyte membranes as represented by the perfluorosulfonic acid membrane known by the trade name of "Nafion^{®}" (manufactured by DuPont).

A second aspect of the present invention is the invention of a method for producing the above-described vinyl polymer of a sulfonated monomer, which is a vinyl polymerization method of a sulfonated monomer having a basic skeleton represented by the following formula (2), wherein polymerizing a monomer solution comprising at least the sulfonated monomer having a basic skeleton represented by the following formula (2), a solvent and a polymerization initiator is subjected to polymerization, characterized in that the concentration of the sulfonated monomer in the monomer solution is 20 mol/L or more, 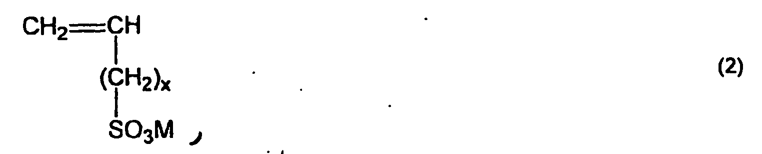 the solvent is water, and the polymerization initiator is 2,2'-azobis (2-amidinopropane) dihydrochloride, and
wherein x is 2 M is an alkali metal ion or an alkyl group having 1 to 10 carbon atoms. .

Examples of the method for producing the polymer of a sulfonated monomer according to the present invention include batch polymerization for polymerization by charging a solution of the sulfonated monomer dissolved in water or the like and a polymerization initiator together into a polymerization vessel; and consecutive addition for polymerization while adding a solution of the sulfonated monomer dissolved in water or the like and a polymerization initiator dropwise into a polymerization vessel. However, in batch polymerization, it is difficult to remove the heat of polymerization from the polymerization reaction, and thus consecutive addition is preferably used.

In the vinyl polymerization according to the present invention, the polymerization temperature is sufficient at the temperature where typical radical polymerization reaction is carried out, however it is usually 10 to 100°C and more preferably 40 to 90°C. The polymerization time is preferably 2 to 30 hours.

The added amount of the polymerization initiator used in the present invention is 0.01 to 20 parts by weight based on 100 parts by weight of the sulfonated monomer. The added amount may be smaller when trying to obtain a solution of a high-molecular weight sulfonated monomer, and larger when trying to obtain a solution of a low-molecular weight polymerized product. If the added amount of the polymerization initiator is less than 0.01 parts by weight, the high-molecular weight sulfonated monomer solution is very viscous, which makes stirring difficult during production, so that the polymerization rate slows and productivity deteriorates. The added amount preferably does not exceed 20 parts by weight, since a lower molecular weight sulfonated monomer solution is not obtained even if more polymerization initiator is added, and the excess remains as a catalyst residue.

Examples of the sulfonated monomer in the vinyl polymerization according to the present invention include an alkali metal salt of 1-butenesulfonic acid or 1-butenesulfonic acid alkyl ester.

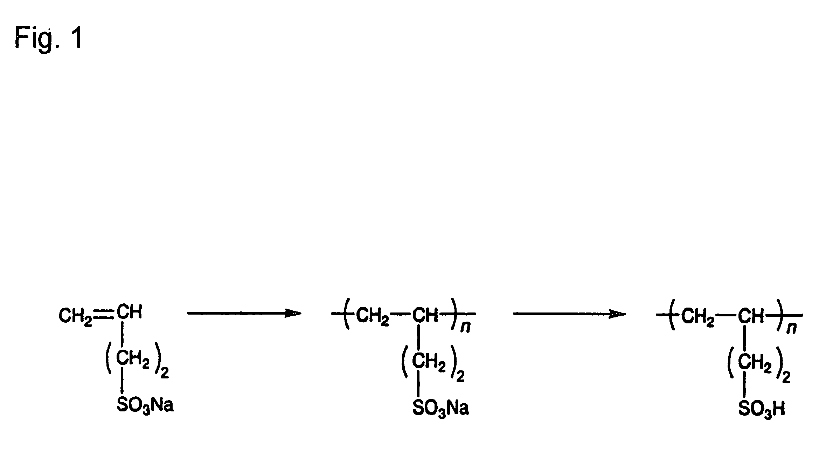

Figure 1 illustrates one example of a polymerization scheme of a sulfonated monomer according to the polymerization reaction and hydrolysis reaction of the present invention.

A third aspect of the present invention is a polymer electrolyte comprising the above-described vinyl polymer of a sulfonated monomer. The above-described formula (1) has in the repeating unit a sulfonic group having a large ion-exchange capacity which functions as an electrolyte. As a result, the vinyl polymer of a sulfonated monomer according to the present invention has excellent proton conductivity.

The polymer electrolyte according to the present invention may be used as a polymer electrolyte for a fuel cell, a polymer electrolyte for water electrolysis and a solid polymer electrolyte for brine electrolysis, as well as a solid polymer electrolyte for hydrohalic acid electrolysis, and can even be widely applied in humidity sensors, gas sensors, oxygen concentrators and the like by utilizing the proton conductivity.

The electrolyte solution according to the present invention is a solution in which the above-described vinyl polymer of a sulfonated monomer is dissolved in a suitable solvent (e.g. water, alcohol, ether, mixtures thereof etc.). The vinyl polymer of a sulfonated monomer can be used alone or by mixing with some other polymer electrolyte or the like.

A fourth aspect of the present invention is a polymer electrolyte membrane obtained by forming a membrane of the above-described vinyl polymer of a sulfonated monomer. The polymer electrolyte membrane according to the present invention can have a smaller ion-exchange level (EW value) due to its chemical structure. This ion-exchange level can be 200 or less, and preferably 150 or less. It is noted that, when the x in the sulfonated monomer is 1, the EW value is theoretically 122.

The vinyl polymer of a sulfonated monomer according to the present invention has hydrocarbon groups on the main chain and side chain, and these linear hydrocarbon groups provide the vinyl polymer with a suitable flexibility. Further, the sulfonic acid group, which is a functional group, renders the vinyl polymer soluble in water. These features contribute to the vinyl polymer of a sulfonated monomer according to the present invention having excellent workability, such as film-forming properties, as well as high proton conductivity.

The polymer electrolyte membrane according to the present invention is formed from the above-described vinyl polymer of a sulfonated monomer by a proper method. The method for forming a film of the vinyl polymer of a sulfonated monomer is not especially limited, and can be carried out using a common method, such as casting a solution onto a flat plate, coating a solution onto a flat plate with a die coater, a comma coater and the like, or stretching a molten vinyl polymer of a sulfonated monomer.

The electrolyte membrane composed of the vinyl polymer of a sulfonated monomer according to the present invention can be formed by flow coating a polymer electrolyte solution containing a solvent such as water onto a glass plate and then removing the solvent. Further, in order to improve the mechanical strength of the electrolyte membrane, the membrane may be crosslinked by irradiating with an electron beam, radiation and the like, or may even be formed as a compound membrane by dipping a porous film or sheet, or may be reinforced by mixing with fiber or pulp. The thickness of the electrolyte membrane is not especially limited, but is preferably 10 to 200 µm. For an electrolyte membrane thinner than 10 µm, strength tends to decrease. For an electrolyte membrane thicker than 200 µm, the membrane resistance increases, whereby the properties of the electrochemical device tend to be inadequate. Film thickness can be controlled by the solution concentration or the coating thickness applied onto the substrate.

A fifth aspect of the present invention is an invention of a solid polymer fuel cell comprising the above-described polymer electrolyte membrane, characterized by stacking a plurality of fuel cell units comprising reaction electrodes which sandwich both faces of the electrolyte membrane and separators which sandwich the reaction electrode.

Employing an electrolyte membrane like that described above, which has excellent chemical and physical properties, allows the various capabilities of the fuel cell as a whole to also be improved. Further, by employing a low-cost electrolyte membrane and electrolyte solution, the fuel cell can also be provided more cheaply.

According to the present invention, vinyl polymerization of a sulfonated monomer, which conventionally was said to be difficult, has become possible. The vinyl polymer of a sulfonated monomer according to the present invention has a dramatically improved degree of freedom in molecular design, excellent flexibility, a large ion-exchange capacity (EW) and excellent film-forming properties. Further, this vinyl polymerization method of a sulfonated monomer is simple and can be carried out at low cost. In addition, the vinyl polymer of a sulfonated monomer according to the present invention is suitable as an ion-exchange membrane for a solid polymer fuel cell.

### Brief Description of the Drawings

Figure 1 illustrates the reaction scheme for the vinyl polymerization method of a sulfonated monomer according to the present invention;
Figure 2 illustrates the synthesis scheme for sodium 1-butenesulfonate;
Figure 3 illustrates the synthesis scheme for methyl 1-butenesulfonate; and
Figure 4 illustrates the synthesis scheme for methyl allylsulfonate.

### Best Mode for Carrying Out the Invention

How the present invention is carried out will now be described in more detail.

### [Synthesis of the sulfonated vinyl monomer]

The following four monomers were synthesized or prepared as the monomers for polymerization investigation.

### 1. Synthesis of "sodium 1-butenesulfonate"

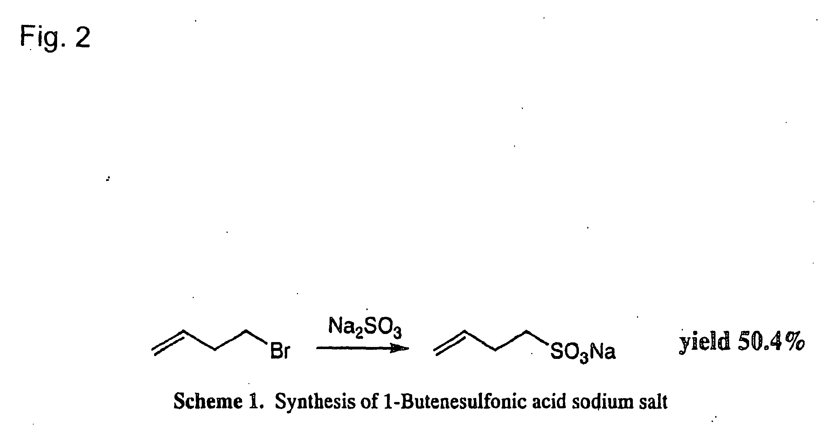

Synthesis was carried out according to the synthesis scheme illustrated in Figure 2, to obtain the subject compound "sodium 1-butenesulfonate" in a yield of 50.4%. Below, this is referred to as "BuSANa".

### 2. Synthesis of "methyl 1-butenesulfonate"

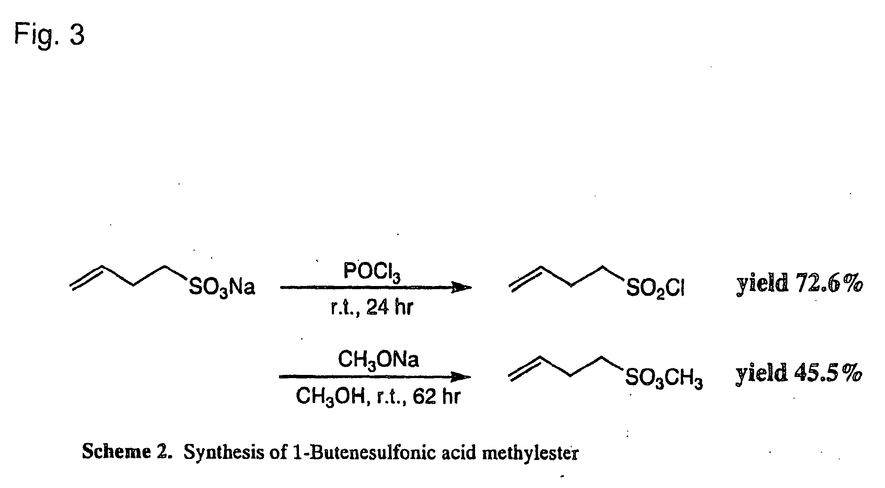

Synthesis was carried out according to the synthesis scheme illustrated in Figure 3, to obtain the subject compound "methyl 1-butenesulfonate" in a yield of 45.5%. Below, this is referred to as "BuSAMe".

### 3. Synthesis of "sodium allylsulfonate"

A commercially available product was used (manufactured by Wako Pure Chemical Industries Ltd.). Below, this is referred to as "AySANa".

### 4. Synthesis of "methyl allylsulfonate"

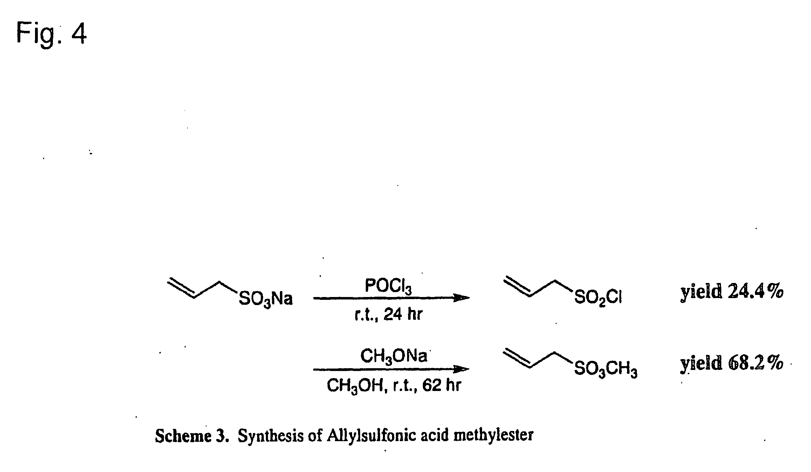

Synthesis was carried out according to the synthesis scheme illustrated in Figure 4, to obtain the subject compound "methyl allylsulfonate" in a yield of 68.2%. Below, this is referred to as "AySAMe".

### [EXAMPLES]

The present invention will now be described in more detail with reference to examples and comparative examples.

### [Investigation of various polymerization methods]

Vinyl polymerization was investigated using the four sulfonated vinyl monomers which had been synthesized and prepared.

### 1. Polymerization investigation of "sodium 1-butenesulfonate (BuSANa)"

### 1-1. Investigation of radical polymerization (1)

Mixed together were 4.0 g of deionized water and 2.5 g of BuSANa. The resultant mixture was purged with nitrogen, and then charged with 0.025 g of potassium persulfate and 0.01 g of sodium sulfite. The resultant mixture was reacted at 50°C for 24 hours. After the reaction was finished, the mixture was reprecipitated with 15 mL of methanol. The resultant solution was filtered, and the obtained residue was dried to obtain white crystals. The recovered product was confirmed by NMR to be a monomer, meaning that a polymerization reaction did not occur.

### 1-2. Investigation of radical polymerization (2)

Mixed together were 10 g of deionized water and 2.0 g of BuSANa. The resultant mixture was heated to 80°C and then purged with argon gas. To this mixture was added dropwise 0.06 g of 30% aqueous hydrogen peroxide, and the resultant mixture was reacted for 12 hours. After the reaction was finished, the mixture was dried at 110°C to obtain 1.86 g of reaction product. The recovered product was confirmed by NMR to be a monomer, meaning that a polymerization reaction did not occur.

### 1-3. Investigation of radical polymerization (3)

Mixed together were 10 g of toluene and 20 g of BuSANa. The resultant mixture was heated to 80°C under vigorous stirring. This mixture was charged with 0.02 g of AIBN, and the resultant mixture was reacted for 8 hours. After the reaction was finished, the mixture was dried at 100°C to obtain 1.86 g of reaction product. The recovered product was confirmed by NMR to be a monomer, meaning that a polymerization reaction did not occur.

### 1-4. Investigation of cationic polymerization (1)

Mixed together were 10 g of methylene chloride and 20 g of BuSANa. The resultant mixture was cooled to 0°C, and then 0.05 mL of a boron fluoride diethyl ether complex was added dropwise. The resultant mixture was reacted for 3 hours. After the reaction was finished, the mixture was dried at 40°C to obtain 1.93 g of reaction product. The recovered product was confirmed by NMR to be a monomer, meaning that a polymerization reaction did not occur.

### 1-5. Investigation of cationic polymerization (2)

The reagents were charged together in the same manner as in the above-described 1-4, and the temperature was changed from -80°C to room temperature over 1 day. 1.75 g of reaction product was obtained. The recovered product was confirmed by NMR to be a monomer, meaning that a polymerization reaction did not occur.

### 1-6. Investigation of cationic polymerization (3)

Mixed together were 10 g of methylene chloride and 20 g of BuSANa. The resultant mixture was heated to 50°C, and then 0.05 mL of a boron fluoride diethyl ether complex was added dropwise. The resultant mixture was then reacted for 3 hours. After the reaction was finished, the mixture was dried at 40°C to obtain 1.90 g of reaction product. The recovered product was confirmed by NMR to be a monomer, meaning that a polymerization reaction did not occur.

### 1-7. Investigation of coordination polymerization (1)

Mixed together were 10 g of hexane and 1.0 g of BuSANa, and the resultant mixture was dispersed by stirring. Then, 2.0 mL of a 0.2 mol/L solution of isobutylaluminum in hexane and 2.0 mL of a 0.2 mol/L solution of titanium tetrachloride in hexane were simultaneously added dropwise. The resultant mixture was reacted for 1 hour as is at room temperature. The reaction was terminated with a small amount of IPA. The mixture was then filtered, and the obtained residue was dissolved by washing with methanol. The resultant solution was concentrated to dryness, and the obtained solid was dried under reduced pressure to obtain 0.9 g of a white powder. The recovered product was confirmed by NMR to be a monomer, meaning that a polymerization reaction did not occur.

### 1-8. Investigation of coordination polymerization (2)

Mixed together were 6.5 g of n-hexane and 1.0 g of BuSANa, and the resultant mixture was dispersed by stirring. Then, 4.8 mg of titanium trichloride and 0.03 mL of a 1 mol/L solution of triethylaluminum in hexane were added dropwise. The temperature of the resultant mixture was increased to 70°C, and then the mixture was reacted for 1 hour. After the reaction was finished, the mixture was extracted with methanol. The resultant product was concentrated to dryness. The obtained solid was dried under reduced pressure to obtain 0.9 g of a white powder. The recovered product was confirmed by NMR to be a monomer, meaning that a polymerization reaction did not occur.

### 1-9. Investigation of radical polymerization (4)

Mixed together were 6.4 g of BuSANa and 2.0 g of deionized water. The resultant mixture was charged with 0.5 g of 2,2'-azobis(2-amidinopropane)dihydrochloride (AAPDHC) and then dissolved at 90°C. The resultant mixture was then reacted at 100°C for 10 hours. After the reaction was finished, the mixture was dissolved by adding 8.0 g of deionized water, and then reprecipitated with ten times that amount of methanol. The mixture was filtered and then dried at 50°C to obtain 1.6 g of reaction product. Inherent viscosity was 0.018 (water 0.5 g/dL at 30°C), and also from NMR analysis the double bond was found to have disappeared, meaning that a polymerization reaction had occurred.

The following Table 1 shows all of the results of the polymerization investigations of sodium 1-butenesulfonate (BuSANa). In the Table, "monomer concentration" is denoted in mol/L.

### Table 1

**Table 1. Result of polymerization of 1-Butenesulfonic acid sodium salt**

| Entry | initiator | solv. | temp. (°C) | reaction time (hr) | [monomer] | results |
|---|---|---|---|---|---|---|
| 1-1 | K₂S₂O₈+NaHSO₃ | H₂O | 50 | 24 | 3.95 | no reaction |
| 1-2 | H₂O₂ | H₂O | 80 | 12 | 1.26 | no reaction |
| 1-3 | AIBN | toluene | 80 | 8 | 1.10 | no reaction |
| 1-4 | Et₂O • BF₃ | CH₂Cl₂ | 0 | 3 | 1.68 | no reaction |
| 1-5 | Et₂O • BF₃ | CH₂Cl₂ | -80 → r.t. | 24 | 1.68 | no reaction |
| 1-6 | Et₂O • BF₃ | CH₂Cl₂ | 50 | 3 | 1.68 | no reaction |
| 1-7 | TiCl₄ / Al(*i*-Bu)₃ | n-hexane | r.t. | 1 | 0.429 | no reaction |
| 1-8 | TiCl₃/AiEt₃ | n-hexane | 70 | 1 | 0.660 | no reaction |
| 1-9 | AAPDHC* | H₂O | 100 | 10 | 20.2 | white powder |

| | | | | | | |
|---|---|---|---|---|---|---|
| *AAPDHC: 2,2'-Azobis(2-amidinopropane)dihydrochloride | | | | | | |

It can be seen from the results in Table 1 that polymerization only occurs when the monomer concentration is 20 mol/L or more.

### 2. Polymerization investigation of "methyl 1-butenesulfonate (BuSAMe)"

### 2-1. Investigation of anionic polymerization

Mixed together were 10 g of anhydrous THF and 10 g of BuSAMe. The resultant mixture was cooled to -80°C, and then 0.26 mL of a solution of 154 mol/L butyllithium in hexane was added dropwise. The resultant mixture was then reacted for 2 hours. After the reaction was finished, the mixture was dried at 40°C to obtain 0.37 g of reaction product. Although a peak was seen at Mw = 1,000 by SEC, no decrease in vinyl groups was seen by NMR, so polymerization was not confirmed.

### 2-2. Investigation of cationic polymerization

Mixed together were 10 g of methylene chloride and 10 g of BuSAMe. The resultant mixture was cooled to 0°C, and then 0.025 mL of a boron fluoride diethyl ether complex was added dropwise. The resultant mixture was then reacted for 3 hours. After the reaction was finished, the mixture was dried at 40°C to obtain 1.0 g of reaction product. No peaks were seen with SEC, and the recovered product was confirmed by NMR to be a monomer.

### 2-3. Investigation of coordination polymerization (1)

Mixed together were 10 g of n-hexane and 1.0 g of BuSAMe, and the resultant mixture was dispersed by stirring. Then, 2.0 mL of a 0.2 mol/L solution of isobutylaluminum in hexane and 2.0 mL of a 0.2 mol/L solution of titanium tetrachloride in hexane were simultaneously added dropwise. The resultant mixture was reacted for 1 hour as is at room temperature. The reaction was terminated with a small amount of IPA. The mixture was then concentrated to dryness to obtain 0.9 g of a mixture of a white solid and a liquid. A peak was seen at Mw = 3,000 by SEC. 0.08 g of a solid product was obtained by filtration. Although a decrease in protons in the methyl ester was confirmed by NMR, no decrease in vinyl groups was seen, so polymerization was not confirmed.

### 2-4. Investigation of coordination polymerization (2)

Mixed together were 6.5 g of n-hexane and 1.0 g of BuSAMe, and the resultant mixture was dispersed by stirring. Then, 4.8 mg of titanium trichloride and 0.03 mL of a 1 mol/L solution of triethylaluminum in hexane were added dropwise. The temperature of the resultant mixture was increased to 70°C, and then the mixture was reacted for 1 hour. After the reaction was finished, the mixture was extracted with methanol. The resultant product was concentrated to dryness. The obtained solid was dried under reduced pressure to obtain 0.9 g of a white powder. Although a peak was seen at Mw = 3,000 by SEC, no decrease in vinyl groups was seen by NMR, so polymerization was not confirmed.

The following Table 2 shows all of the results of the polymerization investigations of methyl 1-butenesulfonate (BuSAMe). In the Table, "monomer concentration" is denoted in mol/L.

### Table 2

**Table 2. Result of polymerization of 1-Butenesulfonic acid methylester**

| Entry | initiator | solv. | temp. (°C) | reaction time (hr) | [monomer] | results |
|---|---|---|---|---|---|---|
| 2-1 | *n*-BuLi | THF | -80 | 2 | 0.599 | no reaction* |
| 2-2 | Et₂O • BF₃ | CH₂Cl₂ | 0 | 3 | 0.883 | no reaction |
| 2-3 | TiCl₄/Al(i-Bu)₃ | *n*-hexane | r.t. | 1 | 0.451 | no reaction** |
| 2-4 | TiCl₃ / AlEt₃ | *n*-hexane | 70 | 1 | 0.694 | no reaction*** |

| | | | | | | |
|---|---|---|---|---|---|---|
| * Peak confirmed at Mw = 1,000 by SEC, but no decrease in vinyl groups was seen by ¹H-NMR. ** Peak confirmed at Mw = 3,000 by SEC, but no decrease in vinyl groups was seen by ¹H-NMR, and a small decrease in the number of protons at the methyl ester site was seen. *** Peak confirmed at Mw = 3,000 by SEC, but no decrease in vinyl groups was seen by ¹H-NMR. | | | | | | |

It can be seen from the results in Table 2 that polymerization did not occur in any of the cases where the monomer concentration was less than 20 mol/L.

### 3. Polymerization investigation of "sodium allylsulfonate (AySANa)" (Reference)

### 3-1. Investigation of radical polymerization (1)

Mixed together were 10 g of deionized water and 2 g of AySANa. The resultant mixture was heated at 80°C and then purged with argon gas. To this mixture was added dropwise 0.06 g of 30% aqueous hydrogen peroxide, and the resultant mixture was reacted for 12 hours. After the reaction was finished, the mixture was dried at 110°C to obtain 1.9 g of reaction product. The recovered product was confirmed by NMR to be a monomer.

### 3-2. Investigation of cationic polymerization

Mixed together were 10 g of methylene chloride and 2 g of AySANa. The resultant mixture was cooled to 0°C, and then 0.025 mL of a boron trifluoride diethyl ether complex, which is a polymerization initiator, was added dropwise. The resultant mixture was then reacted for 3 hours. After the reaction was finished, the mixture was dried at 40°C to obtain 1.0 g of reaction product. The recovered product was confirmed by NMR to be a monomer.

### 3-3. Investigation of radical polymerization (2)

Mixed together were 2.0 g of deionized water and 6.4 g of AySANa. The resultant mixture was charged with 0.6 g of 2,2'-azobis(2-amidinopropane)dihydrochloride (AAPDHC) and then dissolved at 90°C. The resultant mixture was then reacted at 100°C for 10 hours. After the reaction was finished, the mixture was dissolved by adding 8 g of deionized water, and then reprecipitated with ten times that amount of methanol. The mixture was filtered and then dried at 50°C to obtain 1.6 g of reaction products Inherent viscosity was 0.025 (water 0.5 g/dL at 30°C), and also from NMR analysis the double bond was found to have disappeared, meaning that a polymerization reaction had occurred.

The following Table 3 shows all of the results of the polymerization investigations of sodium allylsulfonate (AySANa). In the Table, "monomer concentration" is denoted in mol/L.

### Table 3

**Table 3. Result of polymerization of Allylsulfonic acid sodium salt**

| Entry | initiator | solv. | temp. (°C) | reaction time (hr) | [monomer] | results |
|---|---|---|---|---|---|---|
| 3-1 | H₂O₂ | H₂O | 80 | 12 | 1.24 | no reaction |
| 3-2 | Et₂O • BF₃ | CH₂Cl₂ | 0 | 3 | 0.920 | no reaction |
| 3-3 | AAPDHC* | H₂O | 100 | 10 | 22.2 | white powder |

| | | | | | | |
|---|---|---|---|---|---|---|
| *AAPDHC: 2,2'-Azobis(2-amidinopropane)dihydrochloride | | | | | | |

It can be seen from the results in Table 3 that polymerization only occurs when the monomer concentration is 20 mol/L or more.

### 4. Polymerization investigation of "methyl allylsulfonate (AySAMe)" (Reference)

### 4-1. Investigation of anionic polymerization

Mixed together were 10 g of anhydrous THF and 1.0 g of AySAMe. The resultant mixture was cooled to -80°C, and then 0.26 mL of a solution of 1.54 mol/L butyllithium in hexane was added dropwise. The resultant mixture was then reacted for 2 hours. After the reaction was finished, the mixture was dried at 40°C to obtain 0.05 g of reaction product. A peak was seen at Mw = 1,000 by SEC.

### 4-2. Investigation of cationic polymerization

Mixed together were 10 g of methylene chloride and 1.0 g of AySAMe. The resultant mixture was cooled to 0°C, and then 0.025 mL of a boron fluoride diethyl ether complex was added dropwise. The resultant mixture was reacted for 3 hours. After the reaction was finished, the mixture was dried at 40°C to obtain 1.0 g of reaction product. Although a peak was seen at Mw = 1,000 by SEC, the recovered product was confirmed by NMR to be a monomer.

### 4-3. Investigation of coordination polymerization (1)

Mixed together were 10 g of n-hexane and 1.0 g of AySAMe, and the resultant mixture was dispersed by stirring. Then, 2.0 mL of a 0.2 mol/L solution of isobutylaluminum in hexane and 2.0 mL of a 0.2 mol/L solution of titanium tetrachloride in hexane were simultaneously added dropwise. The resultant mixture was reacted for 1 hour as is at room temperature. The reaction was terminated with a small amount of IPA. The mixture was then concentrated to dryness to obtain 0.99 g of a mixture of a white solid and a liquid. A peak was seen at Mw = 1,000 by SEC. Although a decrease in protons in the methyl ester was confirmed by NMR, no decrease in vinyl groups was seen, so polymerization was not confirmed.

### 4-4. Investigation of coordination polymerization (2)

Mixed together were 6.5 g of n-hexane and 1.0 g of AySAMe, and the resultant mixture was dispersed by stirring. Then, 4.8 mg of titanium trichloride and 0.03 mL of a 1 mol/L solution of triethylaluminum in hexane were added dropwise. The temperature of the resultant mixture was increased to 70°C, and then the mixture was reacted for 1 hour. After the reaction was finished, the mixture was extracted with methanol. The obtained product was concentrated to dryness, and the resultant solid was dried under reduced pressure to obtain a small 0.9 g amount of a mixture of a white solid and a liquid. Although a peak was seen at Mw = 3,000 by GPC, no decrease in vinyl groups was seen by NMR, so polymerization was not confirmed.

The following Table 4 shows all of the results of the polymerization investigations of sodium methyl allylsulfonate (AySAMe). In the Table, "monomer concentration" is denoted in mol/L.

### Table 4

**Table 4. Result of polymerization of Allylsulfonic acid methylester**

| Entry | initiator | solv. | temp. (°C) | reaction time (hr) | [monomer] | results |
|---|---|---|---|---|---|---|
| 4-1 | n-BuLi | THF | -80 | 2 | 0.661 | no reaction* |
| 4-2 | Et₂O • BF₃ | CH₂Cl₂ | 0 | 3 | 0.974 | no reaction** |
| 4-3 | TiCl₄ / Al(*i*-Bu)₃ | *n*-hexane | r.t. | 1 | 0.498 | no reaction*** |
| 4-4 | TiCl₃/AlEt₃ | *n*-hexane | 70 | 1 | 0.498 | no reaction**** |

| | | | | | | |
|---|---|---|---|---|---|---|
| * Peak confirmed at Mw = 1,000 by SEC, but did not dissolve in the ¹H-NMR analysis solvent. ** Peak confirmed at Mw = 1,000 by SEC, but no decrease in vinyl groups was seen by ¹H-NMR. ** Peak confirmed at Mw = 1,000 by SEC, but no decrease in vinyl groups was seen by ¹H-NMR, and a small decrease in the number of protons at the methyl ester site was seen. *** Peak confirmed at Mw = 3,000 by SEC, but no decrease in vinyl groups was seen by ¹H-NMR. | | | | | | |

It can be seen from the results in Table 4 that polymerization did not occur in any of the cases where the monomer concentration was less than 20 mol/L.

From the above results, it can be seen that polymerization does not occur in any of the cases where the sulfonated monomer concentration was less than 20 mol/L; and that the vinyl polymer of a sulfonated monomer according to the present invention can be obtained by Polymerization only when the monomer concentration is 20 mol/L or more.

## Claims

1. A vinyl polymer of a sulfonated monomer having a basic skeleton represented by the following formula (1), 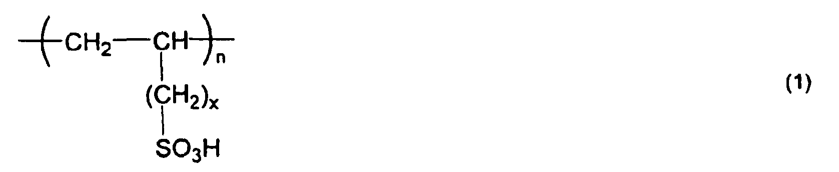 wherein x is 2 and n is 10 to 10,000, and wherein the vinyl polymer is a homopolymer or a copolymer with another vinyl monomer.

2. A vinyl polymerization method of a sulfonated monomer having a basic skeleton represented by the following formula (2), wherein a monomer solution comprising at least the sulfonated monomer having a basic skeleton represented by the following formula (2), a solvent and a polymerization initiator is subjected to polymerization, **characterized in that** the concentration of the sulfonated monomer in the monomer solution is 20 mol/L or more, the solvent is water, and the polymerization initiator is 2,2'-azobis(2-amidinopropane)dihydrochloride, 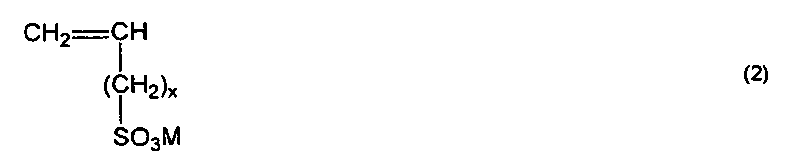 and wherein x is 2 and M is an alkali metal ion or an alkyl group having 1 to 10 carbon atoms.

3. The vinyl polymerization method according to claim 2, **characterized in that** the sulfonated monomer is an alkali metal salt of 1-butenesulfonic acid or an alkyl ester of 1-butenesulfonic acid.

4. A polymer electrolyte comprising the vinyl polymer of a sulfonated monomer according to claim 1.

5. A polymer electrolyte membrane, **characterized in that** the membrane is formed from the vinyl polymer of a sulfonated monomer according to claim 1.

6. The polymer electrolyte membrane according to claim 5, **characterized in that** an ion-exchange level EW value thereof is 200 or less.

7. A solid polymer fuel cell, **characterized by** stacking a plurality of fuel cell units comprising the polymer electrolyte membrane according to claim 5 or 6, reaction electrodes which sandwich both faces of the electrolyte membrane and separators which sandwich the reaction electrode.

## Patentansprüche

1. Vinylpolymer eines sulfonierten Monomers mit einem Grundgerüst, das durch die nachstehende Formel (1) dargestellt ist, 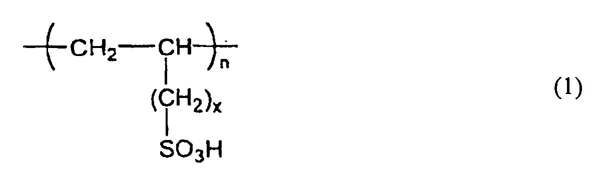 wobei x 2 entspricht und n 10 bis 10.000 entspricht, und wobei das Vinylpolymer ein Homopolymer oder ein Copolymer mit einem weiteren Vinylmonomer ist.

2. Vinylpolimerisationsverfahren eines sulfonierten Monomers mit einen Grundgerüst, das durch die nachstehende Formel (2) dargestellt ist, wobei eine Monomerlösung, die zumindest das sulfonierte Monomer mit einem Grundgerüst aufweist, das durch die nachstehende Formel (2) dargestellt ist, ein Lösungsmittel und ein Polymerisationsinitiator einer Polymerisation unterzogen werden, **dadurch gekennzeichnet, dass** die Konzentration des sulfonierten Monomers in der Monomerlösung 20 mol/L oder mehr ist, das Lösungsmittel Wasser ist und der Polymerisationsinitiator 2,2'-Azobis(2-amidinopropan)dihydrochlorid ist, 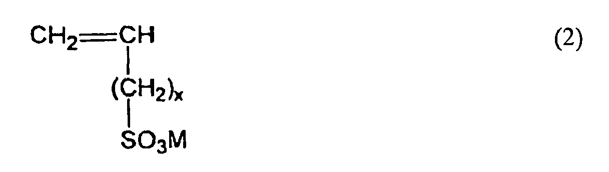 und wobei x 2 entspricht und M einem Alkalimetal-Ion oder einer Alkylgruppe mit 1 bis 10 Kohlenstoffatomen entspricht.

3. Vinylpolymerisationsverfahren nach Anspruch 2, **dadurch gekennzeichnet, dass** das sulfonierte Monomer ein Alkalimetallsalz einer 1-Butensulfonsäure oder ein Alkylester einer 1 -Butensulfonsäure ist.

4. Polymerelektrolyt, aufweisend das Vinylpolymer eines sulfonierten Monomers nach Anspruch 1.

5. Polymerelektrolytmembran, **dadurch gekennzeichnet, dass** die Membran aus dem Vinylpolymer eines sulfonierten Monomers nach Anspruch 1 besteht.

6. Polymerelektrolytmembran nach Anspruch 5, **dadurch gekennzeichnet, dass** ein Äquivalentgewichtswert auf Ionenaustauschebene derselben 200 oder weniger beträgt.

7. Festpolymer-Brennstoffzelle, **gekennzeichnet durch** Aneinanderstapeln von einer Mehrzahl von Brennstoffzelleneinheiten, die die Polymerelektrolytmembran nach Anspruch 5 oder 6, Reaktionselektroden, die beide Flächen der Elektrolytmembran beidseitig umgeben, und Separatoren, die die Reaktionselektrode beidseitig umgeben, aufweisen.

## Revendications

1. Polymère de vinyle d'un monomère sulfoné ayant un squelette basique représenté par la formule (1) suivante : 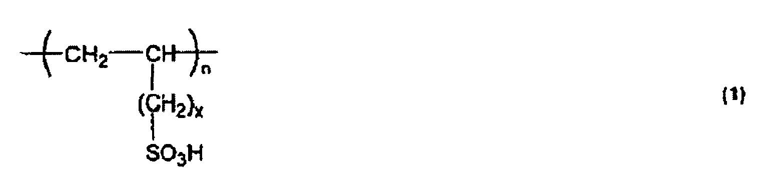 dans laquelle x vaut 2 et n vaut de 10 à 10 000, et dans laquelle le polymère de vinyle est un homopolymère ou un copolymère avec un autre monomère de vinyle.

2. Procédé de polymérisation de vinyle d'un monomère sulfoné ayant un squelette basique représenté par la formule (2) suivante, dans lequel une solution de monomère comprenant au moins le monomère sulfoné ayant un squelette basique représenté par la formule (2) suivante, un solvant et un initiateur de polymérisation est soumis à une polymérisation, **caractérisé en ce que** la concentration du monomère sulfoné dans la solution de monomère est de 20 mol/L ou plus, le solvant est l'eau, et l'initiateur de polymérisation est le dichlorhydrate de 2,2'-azobis(2-amidinopropane), 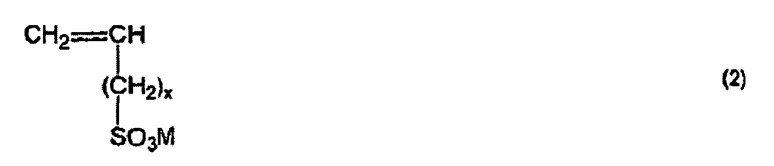 et dans laquelle x vaut 2 et M est un ion de métal alcalin ou un groupe alkyle comportant 1 à 10 atomes de carbone.

3. Procédé de polymérisation de vinyle selon la revendication 2, **caractérisé en ce que** le monomère sulfoné est un sel de métal alcalin d'acide 1-butènesulfonique ou un ester d'alkyle d'acide 1-butènesulfonique.

4. Electrolyte polymère comprenant le polymère de vinyle d'un monomère sulfoné selon la revendication 1.

5. Membrane à électrolyte polymère, **caractérisée en ce que** la membrane est formée du polymère de vinyle d'un monomère sulfoné selon la revendication 1.

6. Membrane à électrolyte polymère selon la revendication 5, **caractérisée en ce qu'**un niveau d'échange d'ions, valeur EW de cette dernière est de 200 ou moins.

7. Pile à combustible à polymère solide, **caractérisée par** l'empilement d'une pluralité d'unités de piles à combustible comprenant la membrane à électrolyte polymère selon la revendication 5 ou 6, des électrodes de réaction qui prennent en sandwich les deux faces de la membrane à électrolyte et des séparateurs qui prennent en sandwich l'électrode de réaction.
